# EUROPEAN PATENT SPECIFICATION

(11) **EP 1 847 326 B1**
(45) Date of publication and mention of the grant of the patent: **07.09.2011**
(21) Application number: 07380081.5
(22) Date of filing: 27.03.2007
(51) Int. Cl.: B05B 9/08

(54) **Manual pump for pre-pressurized sprayers**
Manuelle Pumpe für einen druckbeaufschlagten Sprüher
Pompe manuelle pour un pulvérisateur pre-comprimé

(30) Priority: 07.04.2006 ES 200600909
(43) Date of publication of application: 24.10.2007
(73) Proprietor: GOIZPER, S. COOP., E-20577 Antzuola (ES)
(72) Inventor: Irizar Igarzabal, Miguel Angel, 20570 Bergara (Guipuzkoa) (ES)
(74) Representative: Durán Moya, Carlos

(56) References cited:
- US-A1- 2006 065 762
- US-A1- 2006 131 331
- US-A1- 2006 249 223

## Description

The present invention discloses a manual pump applicable to compressors of the type named pre-pressurized, to which it contributes significant characteristics of novelty and inventive step.

Sprayers of the pre-pressurized type are characterized in that they comprise an assembly of a tank for liquid and at the same time a pressurized air chamber and a manual pump intended to increase the pressure of the air chamber, so that at all times there can be a sufficient overpressure of air, in the tank which contains the liquid, to expel the latter towards the spray nozzle. When the pressure drops, the manual pumping action restores the pressure to operating levels.

See for example US 2006/065762 which is considered as closest prior art.

An ever more important feature in this type of sprayer intended for mass production consists in achieving reduced manufacturing costs alongside good operating characteristics, in order to permit correct service of the spray pump, together with an economic selling price for the apparatus. For this reason, the technological improvements introduced in the members of which they are composed are very important and, while maintaining the operating characteristics, also make it possible to achieve greater manufacturing economy and, therefore, obtain competitive advantages.

The manual pumps for spraying apparatuses of the type indicated have a cylinder and piston assembly incorporated in the tank which contains the liquid to be sprayed and the pressurized air chamber, so that the plunger is associated with a top handle for manual actuation, for which its operation requires reciprocating displacement along the cylinder, currently arranged vertically. For this reason, the cylinder has to carry associated stop members of the plunger assembly, in order to prevent the escape of said plunger assembly outside the cylinder during its upward stroke, or of the charge of air to be compressed. In the pumps of known type different systems of stops are provided for limiting the axial displacement of the plunger, but these are relatively complex and troublesome by reason of the number of parts of which they are composed and of the assembly requirements involved.

The present invention is intended to remedy the above-mentioned drawbacks of manufacturing cost and assembly of the axial stop systems for the plunger of the manual pump. In addition, a further aim of the present invention consists in providing a safety part which prevents the escape of the plunger to the outside in the case of failure of the non-return valve. To this end, the present invention provides for the simple arrangement of a stop mounted from the outside of the cylinder, which traverses the walls of the latter and which reaches the inside of the chamber of the cylinder through which the plunger moves, so that it acts as an end stop during the intake movement of the plunger. The stop provided in the present invention may be of any type which permits its easy assembly on the walls of the cylinder, being retained in position and efficiently performing its stop function. In a preferred embodiment, said stop will be constituted by a plate-like member fitted from the outside of the cylinder, which has resilient properties, and which is retained resiliently, that is, by "clipping", on the body of the cylinder, protruding into the chamber of the cylinder itself in order to perform its stop functions. Assembly is extremely simple, since it requires only the introduction of the stop by pressure into its seat in the cylinder, and its disassembly, given that it is simply held resiliently, the deformation of the stop, which can be achieved even with the fingers, being also very simple, so that the need to have tools available in order to carry out maintenance work is avoided.

In the preferred embodiment of flat type, the stop member will be in the shape of an arc of a circle with retaining hooks at its ends and a central protuberance directed towards the cylinder chamber in order to perform its stop function. In an optional variant it may, if required, have on the outside a small extension to facilitate its withdrawal.

As can be seen, the precise execution of the pressure-fitted stop may vary, without departing from the scope of the present invention, since the same results and function could be obtained with a stop in the form of a radial pivot of prismatic, cylindrical or other shape, pressure-fitted on the walls of the cylinder or by means of small claws for resilient retention in its seat, a flat stop in the shape of a half-moon, etc.

For greater understanding thereof, drawings of a preferred embodiment of the present invention are appended by way of explanatory but non-limiting example.

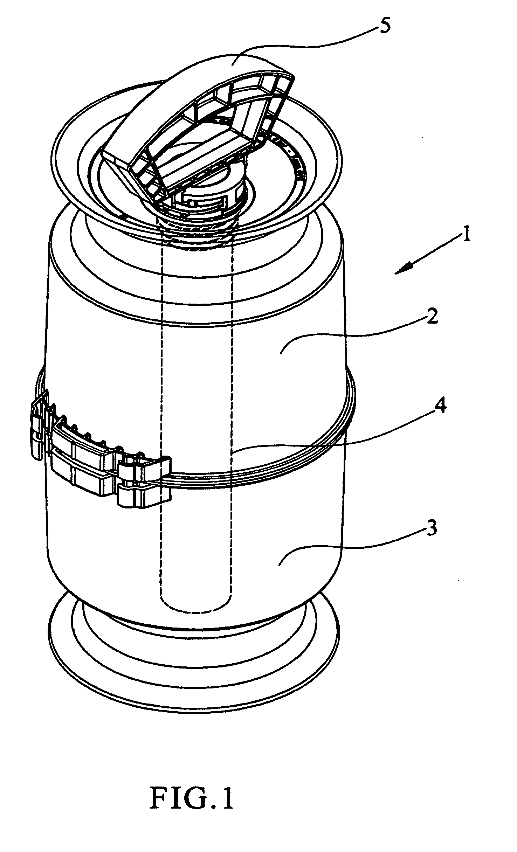

Figure 1 is a perspective view of a manual sprayer produced according to the present invention.
Figure 2 shows the cylinder and piston assembly of the pump shown in Figure 1, in partial section.
Figure 3 shows a detail of the mounting of the retaining stop.
Figure 4 is a perspective view of a preferred embodiment of the resilient retaining stop.

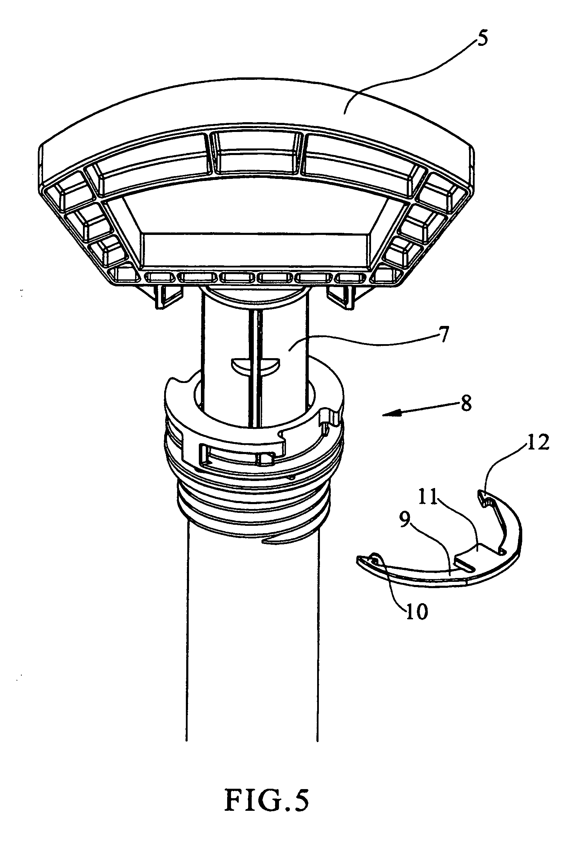

Figure 5 is a perspective view in which can be seen the form of coupling of the retaining stop on the cylinder assembly.

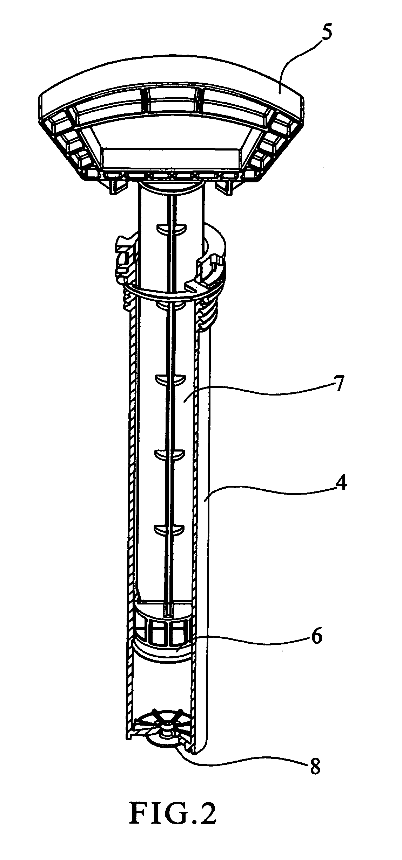

As shown in the drawings, the manual sprayer of the present invention comprises a body 1 of variable shape, substantially cylindrical in this particular example which is shown, formed by an upper part 2 and a lower part 3 coupled to each other by conventional means, and inside which is arranged a cylinder and piston assembly shown by dashed lines 4, which is equipped with a manual actuating handle 5. As can be seen in Figure 2, the cylinder 4 has on the inside a piston 6 associated with a stem 7, of variable constitution, for example of laminar structure based on two members or portions arranged at 90°, which are joined at the top to the actuating handle 5. The cylinder and plunger assembly is intended to draw in air when the piston 6 moves towards the top and to blow the air inside the body 1 during its downward stroke. Although the valves have not been shown in detail, the bottom valve 8 located in the lower part of the cylinder 4 can be seen.

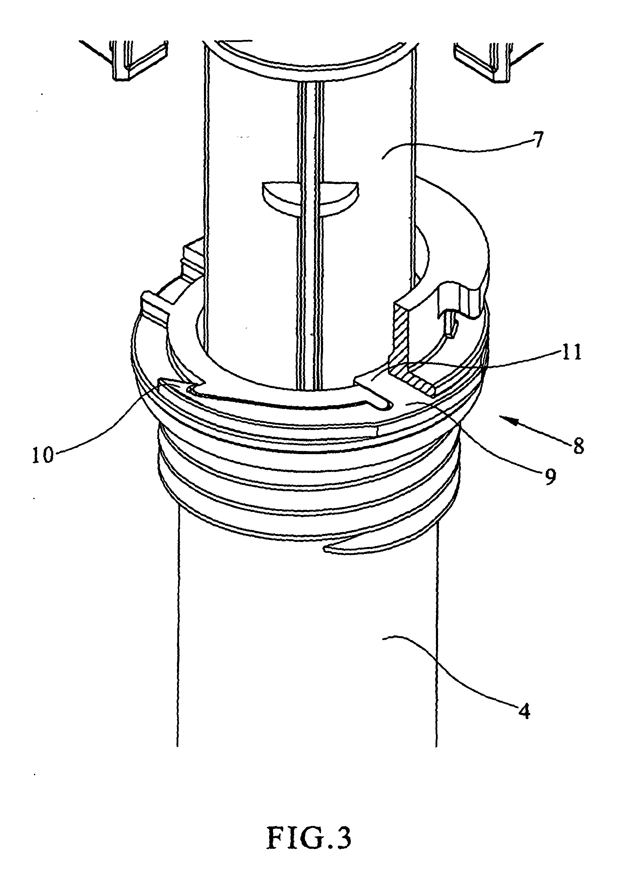

The present invention provides for the arrangement of a stop introduced from the outside of the cylinder 4, in particular, on the upper head 8 of said cylinder 4. In the specific case shown, an arcuate member of generally flat structure 9 is introduced into a seat of the upper head 8 and is held resiliently in said seat, for example by means of end hooks such as the hook 10 which is shown in Figure 3. A central tongue of said stop 9, which is indicated by the number 11, protrudes into the inside of the cylinder 4, acting as an axial stop for the piston 6. As can be observed in Figure 3, the member 9 may be withdrawn with the fingers, stretching the hooks 10.

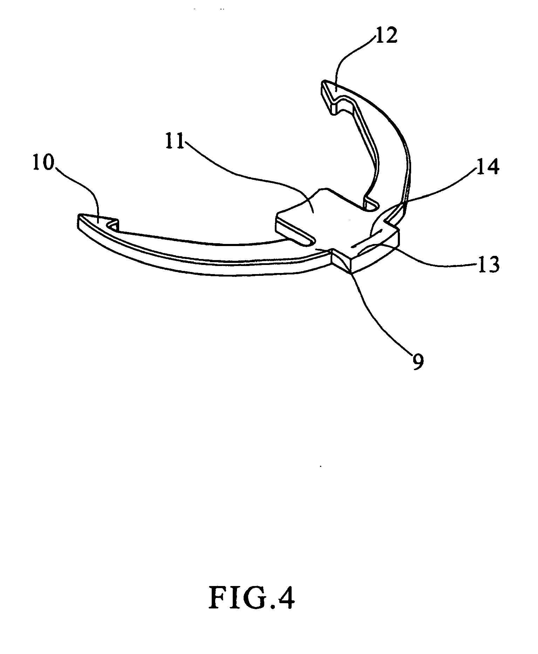

In an alternative embodiment shown in detail in Figure 4, the stop member 9 is generally arcuate in shape with end hooks 10 and 12 and a central tongue 11, the function of which has already been shown and described. It is optionally possible to provide a small protruding edge grip 13 to facilitate withdrawal, for which it may have a small recess, groove or knurled area 14, although this may not prove necessary.

Preferably, the material for the retaining stop 9 will be resilient, for example, a synthetic material although, as is to be understood, it could equally be of a metallic nature.

The specific structure of the stop 9 may also vary within wide limits, since apart from the arcuate structure shown, it would also be possible to adopt another type of structure, for example in the form of a half-moon, in the form of a small radially arranged pivot of cylindrical or prismatic shape, etc. or of some other type, its essential characteristics being those of coupling on the body of the pump from the outside, traversing the walls of the cylinder and assuming a stable position in which an extension or zone of said stop comes into the path of displacement of the piston, acting as a useful stop for preventing the escape of same.

Many other variants may be introduced, provided that they come within the scope of the following claims.

## Claims

1. A manual pump for pre-pressurized sprayers, of the type which comprise a body (1) intended to contain the liquid to be sprayed and a chamber for air to be compressed to effect the expulsion and spraying of the liquid, having a cylinder and piston (6) assembly incorporated in said body of the sprayer and equipped externally with a pumping handle (5) for pressurizing the air chamber, **characterized in that** the cylinder is traversed by a stop member for the piston, which is retained in a seat provided on the walls of the cylinder and which stop member protrudes into the inside of the cylinder, providing a stop protuberance to prevent the escape of the piston at the end of its intake stroke.

2. A manual pump for pre-pressurized sprayers, according to claim 1, **characterized in that** the retaining stop (9) for the plunger assumes an arcuate, flat structure, with ends equipped with hooked end pieces for its retention in a seat of complementary shape of the body of the pump cylinder.

3. A manual pump for pre-pressurized sprayers, according to claim 2, **characterized in that** the stop member (9) has a central protruding tongue which exceeds the thickness of the cylinder walls, being introduced, in the assembly position, into the chamber of the cylinder and acting as an axial stop for the piston (6).

4. A manual pump for pre-pressurized sprayers, according to claim 2, **characterized in that** the axial stop (9) has a small tongue protruding towards the outside to permit its withdrawal.

5. A manual pump for pre-pressurized sprayers, according to claim 1, **characterized in that** the stop member (9) is produced from a resilient material to permit its retention in the seat of complementary shape of the cylinder body by the inherent resilience of its material.

6. A manual pump for pre-pressurized sprayers, according to claim 1, **characterized in that** the seat for receiving the stop (9) is provided on the widened upper head of the cylinder of the manual pump.

## Patentansprüche

1. Manuelle Pumpe für Drucksprüher des Typs, welcher einen Körper (1) umfasst, der dazu vorgesehen ist, die zu versprühende Flüssigkeit zu beinhalten, und eine Kammer für zu komprimierende Luft, um den Ausstoß und das Versprühen der Flüssigkeit zu bewirken, mit einer in dem Körper des Sprühers enthaltenen Zylinder und Kolben (6)-Anordnung und außen ausgestattet mit einem Pumpgriff (5) zum Druckbeaufschlagen der Luftkammer, **dadurch gekennzeichnet, dass** der Zylinder von einem Anschlagselement für den Kolben gequert wird, welches in einem an den Wänden des Zylinders bereitgestellten Sitz gehalten wird, und wobei das Anschlagselement in das Innere des Zylinders ragt und einen Anschlagsvorsprung bereitstellt, um das Austreten des Kolbens an dem Ende seines Ansaughubs zu verhindern.

2. Manuelle Pumpe für Drucksprüher nach Anspruch 1, **dadurch gekennzeichnet, dass** der Rückhalteanschlag (9) für die Kolbenstange eine bogenförmige, flache Struktur annimmt mit mit hakenförmigen Endstücken ausgestatteten Enden für seine Zurückhaltung in einem Sitz von komplementärer Form des Körpers des Pumpenzylinders.

3. Manuelle Pumpe für Drucksprüher nach Anspruch 2, **dadurch gekennzeichnet, dass** das Anschlagselement (9) eine mittige hervorragende Zunge aufweist, welche die Dicke der Zylinderwände überschreitet, und die in der Montageposition in die Kammer des Zylinders eingeführt ist und als ein axialer Anschlag für den Kolben (6) fungiert.

4. Manuelle Pumpe für Drucksprüher nach Anspruch 2, **dadurch gekennzeichnet, dass** der axiale Anschlag (9) eine kleine Zunge aufweist, welche nach außen ragt, um sein Entfernen zu erlauben.

5. Manuelle Pumpe für Drucksprüher nach Anspruch 1, **dadurch gekennzeichnet, dass** das Anschlagselement (9) aus einem nachgiebigen Material hergestellt ist, um seine Zurückhaltung in dem Sitz von komplementärer Form des Zylinderkörpers durch die inhärente Nachgiebigkeit seines Materials zu erlauben.

6. Manuelle Pumpe für Drucksprüher nach Anspruch 1, **dadurch gekennzeichnet, dass** der Sitz zum Aufnehmen des Anschlags (9) an dem erweiterten oberen Kopf des Zylinders der manuellen Pumpe bereitgestellt ist.

## Revendications

1. Pompe manuelle pour des pulvérisateurs sous pression, du type qui comprennent un corps (1) destiné à contenir le liquide à pulvériser et une chambre pour l'air à comprimer pour effectuer l'expulsion et la pulvérisation du liquide, avec un ensemble cylindre et piston (6) incorporé dans ledit corps du pulvérisateur et doté extérieurement d'une poignée de pompage (5) pour mettre sous pression la chambre à air, **caractérisée en ce que** le cylindre est traversé par un élément de butée pour le piston, qui est retenu dans un siège disposé sur les parois du cylindre et lequel élément de butée fait saillie à l'intérieur du cylindre, assurant une protubérance de butée pour empêcher l'échappement du piston à l'extrémité de sa course d'admission.

2. Pompe manuelle pour des pulvérisateurs préalablement mis sous pression, selon la revendication 1, **caractérisée en ce que** la butée de retenue (9) pour le plongeur prend la forme d'une structure plate, arquée, avec des extrémités munies de pièces en crochets pour sa retenue dans un siège de forme complémentaire au corps du cylindre de la pompe.

3. Pompe manuelle pour des pulvérisateurs préalablement mis sous pression, selon la revendication 2, **caractérisée en ce que** l'élément de butée (9) comporte une languette centrale faisant saillie qui dépasse l'épaisseur des parois de cylindre, lorsqu'il est introduit dans la position d'assemblage, dans la chambre du cylindre et agissant en tant que butée axiale pour le piston (6).

4. Pompe manuelle pour des pulvérisateurs préalablement mis sous pression, selon la revendication 2, **caractérisée en ce que** la butée axiale (9) présente une petite languette faisant saillie vers l'extérieur pour permettre son retrait.

5. Pompe manuelle pour des pulvérisateurs préalablement mis sous pression, selon la revendication 1, **caractérisée en ce que** l'élément de butée (9) est réalisé à partir d'un matériau plastique pour permettre sa retenue dans le siège de forme complémentaire du corps de cylindre par la souplesse inhérente de son matériau.

6. Pompe manuelle pour des pulvérisateurs préalablement mis sous pression, selon la revendication 1, **caractérisée en ce que** le siège pour recevoir la butée (9) est disposé sur la tête supérieure élargie du cylindre de la pompe manuelle.
